# FASCICULE DE BREVET EUROPEEN

(11) **EP 2 793 664 B1**
(45) Date de publication et mention de la délivrance du brevet: **09.12.2015**
(21) Numéro de dépôt: 12816718.6
(22) Date de dépôt: 12.12.2012
(51) Int. Cl.: A47J 36/02

(54) **ARTICLE CULINAIRE A CONDUCTIVITE THERMIQUE AMELIOREE**
NAHRUNGSMITTELPRODUKT MIT VERBESSERTER WÄRMELEITFÄHIGKEIT
CULINARY ARTICLE WITH IMPROVED THERMAL CONDUCTIVITY

(30) Priorité: 22.12.2011 FR 1162339
(43) Date de publication de la demande: 29.10.2014
(73) Titulaire: SEB S.A., 69130 Ecully (FR)
(72) Inventeur: ALLEMAND, Simon, F-74150 Rumilly (FR); TUFFE, Stéphane, F-73160 Cognin (FR)
(74) Mandataire: Cémeli, Eric Philippe Laurent
(86) Numéro de dépôt international: PCT/FR2012/052894
(87) Numéro de publication internationale: WO 2013/093297

(56) Documents cités:
- US-A1- 2010 108 690

## Description

La présente invention concerne le domaine technique des articles culinaires formant un récipient de cuisson.

La présente invention concerne notamment, mais non exclusivement, les articles culinaires de type poêle et/ou wok. Les woks de type traditionnel présentent une surface de cuisson concave incurvée du centre vers la périphérie, avec un bord supérieur évasé. Les woks de type poêle wok présentent un fond plan raccordé à une paroi latérale incurvée formant au moins un tiers du rayon de l'article culinaire. Leur bord supérieur peut être plus vertical.

La cuisson sautée au wok consiste à cuire rapidement à feu vif les aliments coupés finement, en les remuant constamment, du centre vers les bords.

Il est connu de réaliser des articles culinaires de type poêle ou wok en acier au carbone soumis à un traitement de nitrocarburation ou de nitruration suivi d'un traitement de post-oxydation. Par rapport à des articles culinaires en acier inoxydable, de tels articles culinaires restent relativement économiques, tout en présentant une résistance à la corrosion suffisante pour un utilisation culinaire. Un tel article culinaire est décrit dans le document US-A-2008/0118763.

Un inconvénient des articles culinaires du type précité est l'apparition de fumées lors de cuissons à feu vif utilisant de l'huile, notamment lors de la cuisson sur des foyers au gaz, avec lesquels les flammes chauffent particulièrement une couronne entourant le fond de l'article culinaire. La conductivité thermique de l'acier au carbone ne permet pas en effet de répartir la chaleur de manière suffisamment homogène sur la surface de cuisson pour éviter l'apparition de points chauds dépassant la température de fumée de l'huile.

Un objet de la présente invention est de proposer un article culinaire prévu pour réaliser des cuissons sautées ou rissolées, qui permette de retarder l'apparition de fumées lors de chauffes avec de l'huile.

Un autre objet de la présente invention est de proposer un article culinaire prévu pour réaliser des cuissons sautées ou rissolées, qui présente une résistance à la corrosion satisfaisante.

Un autre objet de la présente invention est de proposer un procédé d'obtention d'un article culinaire prévu pour réaliser des cuissons sautées ou rissolées, qui permette de retarder l'apparition de fumées lors de chauffes avec de l'huile.

Un autre objet de la présente invention est de proposer un procédé d'obtention d'un article culinaire prévu pour réaliser des cuissons sautées ou rissolées, qui présente une résistance à la corrosion satisfaisante.

Ces buts sont atteints avec un article culinaire comportant une surface intérieure de cuisson en acier au carbone nitrocarburé et post-oxydé ou en acier au carbone nitruré et post-oxydé, et une surface extérieure de chauffe, du fait que la surface intérieure de cuisson et la surface extérieure de chauffe appartiennent à un composite métallique colaminé multicouches comportant une première couche extérieure en acier au carbone colaminée avec une deuxième couche en cuivre, la surface intérieure de cuisson étant réalisée sur la première couche. La deuxième couche en cuivre permet de mieux répartir sur la surface de cuisson les calories issues de la source de chauffe. L'apparition de points chauds est ainsi retardée. L'utilisation de matériaux colaminés comportant de l'acier au carbone permet une réalisation plus économique qu'avec des matériaux colaminés comportant de l'acier inoxydable, même en incluant un traitement de nitrocarburation ou de nitruration, ainsi qu'un traitement de post-oxydation, tout en permettant d'obtenir une résistance à la corrosion satisfaisante. L'utilisation du cuivre comme couche diffusante permet d'obtenir un matériau colaminé présentant une tenue mécanique suffisante pour éviter les risques de délaminage lors des traitements thermiques.

Avantageusement, la surface intérieure de cuisson est formée par une couche oxydée de surface formée sur une couche de combinaison présentant une épaisseur comprise entre 25 µm et 50 µm. Ces caractéristiques permettent d'améliorer considérablement la résistance à l'oxydation de la surface intérieure de cuisson.

Selon une forme de réalisation avantageuse, la surface extérieure de chauffe est en acier au carbone nitrocarburé et post-oxydé ou en acier au carbone nitruré et post-oxydé. Cette disposition permet d'obtenir un article culinaire facile à entretenir, par comparaison par exemple avec un article culinaire présentant une surface extérieure de chauffe en cuivre.

Avantageusement alors, la surface extérieure de chauffe est réalisée sur une troisième couche extérieure colaminée avec la deuxième couche en cuivre. Cette disposition permet d'obtenir un article culinaire présentant une construction économique, l'ajout d'une couche supplémentaire d'acier nitruré ne renchérissant pas notoirement le cout matière du colaminé.

Avantageusement alors, la deuxième couche est plus épaisse que la troisième couche. Une épaisseur plus importante de cuivre permet en effet d'améliorer la répartition de la chaleur sur la surface de cuisson.

Avantageusement encore, la troisième couche présente une épaisseur comprise entre 0,1 et 0,8 mm. Ces valeurs présentent un bon compromis coût/caractéristiques.

Avantageusement encore, la deuxième couche est plus épaisse que la première couche. Cette disposition permet d'améliorer la transmission de chaleur à la surface de cuisson.

Avantageusement encore, la première couche présente une épaisseur comprise entre 0,1 et 0,8 mm. Ces valeurs présentent un bon compromis coût/caractéristiques.

Avantageusement encore, la deuxième couche présente une épaisseur comprise entre 0,8 et 1,5 mm. Ces valeurs présentent un bon compromis coût/caractéristiques.

Selon une forme de réalisation avantageuse, la surface intérieure de cuisson s'élève de manière progressive depuis un fond jusqu'à un bord supérieur. Une telle géométrie correspond à des articles culinaires de type wok.

Ces buts sont atteints également avec un procédé de fabrication d'un article culinaire selon l'une au moins des caractéristiques précitées, comprenant les étapes suivantes :
- Se procurer une feuille de composite métallique colaminé multicouches comportant au moins une première couche extérieure en acier au carbone colaminée avec une deuxième couche en cuivre,
- Former un récipient dans ladite feuille,
- Effectuer un traitement de nitrocarburation ou de nitruration sur ledit récipient,
- Effectuer un traitement de post-oxydation sur ledit récipient.

Selon un mode de réalisation, le traitement de nitrocarburation ou de nitruration est réalisé par voie bain de sels. Un traitement par voie bain de sels permet une vitesse de nitrocarburation ou de nitruration plus importante qu'avec d'autres procédés.

Selon un autre mode de réalisation, le traitement de nitrocarburation ou de nitruration est réalisé par voie gazeuse. Un traitement par voie gazeuse permet un meilleur contrôle de la croissance de la couche de combinaison.

Selon un mode de réalisation, le traitement de post-oxydation est réalisé par voie bain de sels. Ce type de traitement permet une vitesse d'oxydation plus importante qu'avec d'autres procédés.

Selon un autre mode de réalisation, le traitement de post-oxydation est réalisé par voie gazeuse.

L'invention sera mieux comprise à l'étude d'un exemple de réalisation, pris à titre nullement limitatif, illustré dans les figures annexées, dans lesquelles :
- la figure 1 illustre une vue schématique en coupe d'un article culinaire selon l'invention,
- la figure 2 illustre une vue agrandie de la coupe de l'article culinaire illustré sur la figure 1,
- la figure 3 illustre une vue encore agrandie d'une partie supérieure de la coupe de l'article culinaire illustré sur la figure 2.

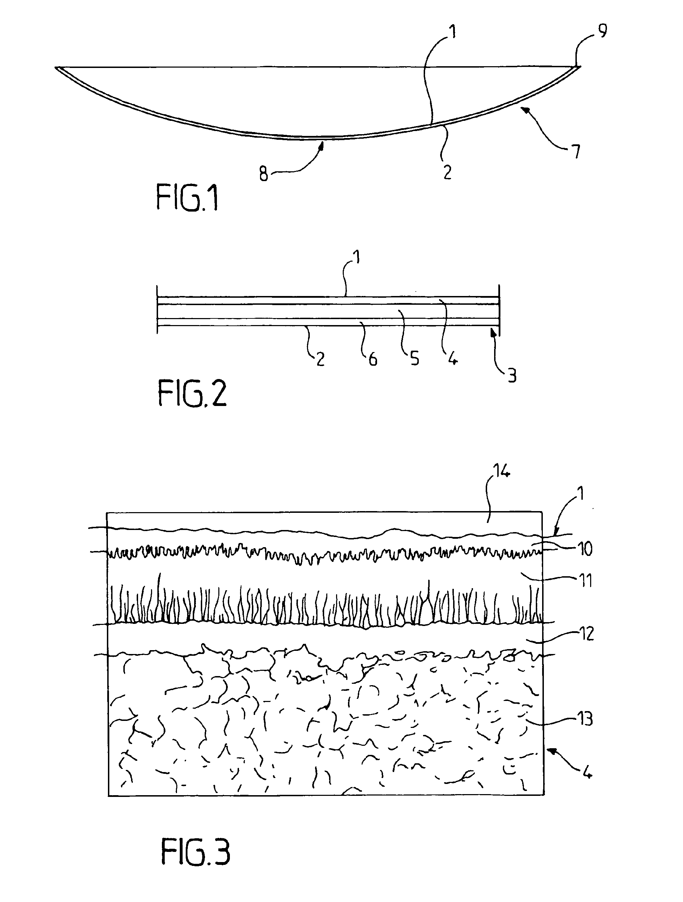

L'article culinaire illustré sur la figure 1 forme un récipient 7 de type wok. L'article culinaire comporte une surface intérieure de cuisson 1 et une surface extérieure de chauffe 2. La surface intérieure de cuisson 1 est concave et la surface extérieure de chauffe 2 est convexe. La surface intérieure de cuisson 1 s'élève de manière progressive depuis un fond 8 du récipient 7 jusqu'à un bord supérieur 9 du récipient 7.

Tel que représenté sur la figure 2, la surface intérieure de cuisson 1 et la surface extérieure de chauffe 2 appartiennent à un composite métallique colaminé multicouches 3. Le composite métallique colaminé multicouches 3 comporte une première couche 4 extérieure en acier au carbone, et une deuxième couche 5 en cuivre. La première couche 4 extérieure en acier au carbone est colaminée avec la deuxième couche 5 en cuivre. La surface intérieure de cuisson 1 est réalisée sur la première couche 4. La deuxième couche 5 interne en cuivre forme une couche diffusante permettant de répartir la chaleur sur la surface intérieure de cuisson.

Plus particulièrement, la deuxième couche 5 en cuivre est une couche intermédiaire. Le composite métallique colaminé multicouches 3 comporte une troisième couche 6 extérieure en acier au carbone. La troisième couche 6 extérieure en acier au carbone est colaminée avec la deuxième couche 5 en cuivre.

L'acier au carbone est de préférence choisi parmi les nuances susceptibles d'être embouties à froid. Un acier avec un faible pourcentage de carbone, par exemple 0,03% C, type DC04, présente des propriétés satisfaisantes.

La première couche 4 et la troisième couche 6 ne sont pas nécessairement réalisées dans la même nuance d'acier au carbone.

De préférence, la deuxième couche 5 est plus épaisse que la première couche 4. De préférence encore, la deuxième couche 5 est plus épaisse que la troisième couche 6. La première couche 4 présente avantageusement une épaisseur comprise entre 0,1 et 0,8 mm. La deuxième couche 5 présente avantageusement une épaisseur comprise entre 0,8 et 1,5 mm. La troisième couche 6 présente une épaisseur comprise entre 0,1 et 0,8 mm.

Dans l'exemple de réalisation illustré sur les figures, la première couche 4 présente une épaisseur de 0,5 mm, la deuxième couche 5 présente une épaisseur de 1 mm et la troisième couche 6 présente une épaisseur de 0,5 mm.

Pour obtenir une résistance à la corrosion compatible avec un usage culinaire, la surface intérieure de cuisson 1 réalisée sur la première couche 4 en acier au carbone est soumise à un traitement de surface.

Selon une forme de réalisation préférée, la surface intérieure de cuisson 1 est en acier au carbone nitrocarburé et post-oxydé.

La figure 3 représente une coupe micrographique de la surface de cuisson 1 recouverte d'une résine 14. Tel que représenté sur la figure 3, la surface intérieure de cuisson 1 est réalisée sur un substrat 13 en acier au carbone. La surface intérieure de cuisson 1 est formée par une couche oxydée de surface 10 obtenue par un traitement de post-oxydation. La couche oxydée de surface 10 est formée sur une couche de combinaison 11 obtenue par un traitement de nitrocarburation. Une couche de diffusion 12 peut être intercalée entre la couche de combinaison 11 et le substrat 13.

Le substrat 13 en acier au carbone représenté sur la figure 3 est formé par la première couche 4, pour réaliser la surface intérieure de cuisson 1. Dans l'exemple de réalisation illustré sur les figures, le substrat 13 en acier au carbone peut aussi être formé par la troisième couche 6, pour réaliser la surface extérieure de chauffe 2.

Pour améliorer la résistance à l'oxydation de l'acier au carbone, l'épaisseur de la couche de combinaison 11 est de préférence supérieure à 30 µm. Une épaisseur comprise entre 25 µm et 50 µm permet d'obtenir un bon compromis entre tenue à la corrosion et durée de traitement.

Les traitements de nitrocarburation et de post-oxydation peuvent être réalisés notamment par voie bain de sels ou par voie gazeuse.

Les traitements de nitrocarburation par voie bain de sels sont généralement réalisés entre 560 et 600°C, ce qui permet d'avoir un pouvoir nitrurant très élevé et des temps de traitements relativement courts.

L'utilisation du composite métallique colaminé multicouches 3 acier/cuivre/acier permet de réaliser un tel traitement de nitrocarburation autour de 600°C sans risque de délaminage de la tôle sandwich, du fait de la bonne tenue en température de l'interface cuivre/acier après colaminage. Des traitements thermiques au four jusqu'à 650°C ont permis de valider la bonne tenue en température des colaminés acier/cuivre/acier au-delà même des températures de nitrocarburation.

D'autres types de colaminés tels que acier/aluminium/acier présentent également des propriétés de diffusion thermique intéressantes, toutefois la tenue limitée en température de l'interface aluminium/acier après colaminage ne permet pas d'envisager leur utilisation pour réaliser un traitement de nitruration ou de nitrocarburation.

Le traitement de nitrocarburation pouvant être réalisé à la température classique de nitrocarburation, on obtient des couches de combinaison 11 possédant des épaisseurs et une résistance à la corrosion identiques à celles obtenues après nitrocarburation d'un article culinaire réalisé à partir d'une feuille d'acier au carbone.

L'étape de post-oxydation n'est pas modifiée par rapport à un traitement standard, elle est réalisée en bain de sel entre 350 et 400°C. Cette post-oxydation permet d'améliorer encore plus la résistance à la corrosion en bouchant les porosités de surface de la couche de combinaison 11, avec la formation de la couche oxydée de surface 10.

A titre de variante, la surface intérieure de cuisson 1 peut aussi être en acier au carbone nitruré et post-oxydé. Un traitement de nitruration est alors effectué au lieu du traitement de nitrocarburation.

Les traitements de nitruration ou de nitrocarburation par voie gazeuse sont généralement réalisés entre 550 et 600°C.

De la même façon que par la voie bain de sels, il est possible de nitrurer ou de nitrocarburer le composite métallique colaminé multicouches 3 acier/cuivre/acier par un traitement classique de nitruration ou de nitrocarburation par voie gazeuse à une température de 600°C.

La post-oxydation permet d'améliorer encore la résistance à la corrosion. Elle peut être réalisée soit par voie bains de sels, usuellement entre 350 et 400°C, soit par voie gazeuse, usuellement autour de 450°C.

Dans l'exemple de réalisation illustré sur les figures, la surface extérieure de chauffe 2 réalisée sur la troisième couche 6 en acier au carbone est soumise aux mêmes traitements de surface que la surface intérieure de cuisson 1.

L'invention concerne également un procédé de fabrication d'un article culinaire comprenant les étapes suivantes :
- Se procurer une feuille de composite métallique colaminé multicouches 3 comportant au moins une première couche 4 extérieure en acier au carbone colaminée avec une deuxième couche 5 en cuivre,
- Former un récipient 7 dans ladite feuille,
- Effectuer un traitement de nitrocarburation ou de nitruration sur ledit récipient 7,
- Effectuer un traitement de post-oxydation sur ledit récipient 7.

Le formage du récipient 7 peut comprendre si désiré une étape de découpe d'un disque ou d'une calotte dans la feuille de composite métallique colaminé multicouches 3. Le formage du récipient 7 peut notamment être réalisé par emboutissage à froid.

La réalisation d'un traitement de nitrocarburation suivi d'un traitement de post-oxydation sur les faces intérieure et extérieure du récipient 7 permet d'améliorer les propriétés de tenue à la corrosion de l'article culinaire. La couche de combinaison 11 forme une couche intermédiaire nitrurée comportant des nitrures de fer Fe_{2,3}N, et est recouverte par la couche oxydée de surface 10 comportant des oxydes de fer de type Fe₃O₄. Le traitement de post-oxydation associé à un polissage adéquat permet d'obtenir une coloration noire pour la surface intérieure de cuisson 1 et la surface extérieure de chauffe 2.

L'article culinaire ainsi obtenu présente des propriétés de diffusion de chaleur améliorées par rapport à un article culinaire réalisé avec une simple paroi en acier nitrocarburé et post-oxydé.

Des essais comparatifs réalisés sur une coupelle en acier bas carbone DC04, d'épaisseur 1 mm et sur une coupelle en composite métallique colaminé multicouches 3 d'épaisseur 2 mm avec 1 mm de cuivre ont montré que le temps nécessaire pour atteindre l'apparition de fumée était augmenté alors que la température d'huile diminuait (essais réalisés avec des coupelles de diamètre 120 mm sur un foyer au gaz de diamètre 50 mm et de puissance 5000 Watts, avec 100 ml d'huile d'arachide versée 10 s après le début de la chauffe).

| Type | Masse | Temps d'apparition de la fumée t_{f} | Température huile à t_{f} |
|---|---|---|---|
| Acier | 308g | 1 min 10 s ± 20 s | 75°C ± 5°C |
| Colaminé | 639g | 2 min 40s ± 30 s | 120°C ± 10°C |

L'utilisation d'un matériau colaminé acier/cuivre/acier permet d'augmenter de façon significative le temps d'apparition de fumée par rapport à l'utilisation de la même épaisseur d'acier, grâce à la présence de la deuxième couche 5 en cuivre. De même, on note l'apparition de fumée pour une température d'huile supérieure à celle observée pour un godet acier, d'où une chauffe plus homogène (moins de points chauds).

L'utilisation du composite métallique colaminé multicouches 3 permet une répartition beaucoup plus homogène en température sur l'ensemble de la la surface intérieure de cuisson 1 et pas seulement seulement au niveau du fond 8 de l'article culinaire.

Le cuivre présente une capacité calorifique de 385 J.kg⁻¹.K⁻¹ voisine de celle de l'acier (444 J.kg⁻¹.K⁻¹) ; toutefois la conductivité thermique du cuivre (390 W.m⁻¹.K⁻¹ est très supérieure à celle de l'acier (46 W.m⁻¹.K⁻¹). L'aluminium présente une capacité calorifique encore plus élevée (897 J.kg⁻¹.K⁻¹), toutefois l'interface colaminée aluminium/acier présente une tenue en température insuffisante pour envisager une nitrocarburation ou une nitruration.

A titre de variante, le composite métallique colaminé multicouches 3 ne comporte pas nécessairement une troisième couche 6 en acier au carbone. La surface extérieure de chauffe 2 peut alors notamment être réalisée sur la deuxième couche 5 en cuivre. Un post polissage de la surface extérieure de chauffe 2 est alors préférable. En alternative, le composite métallique colaminé multicouches 3 peut comporter plus de trois couches colaminées.

A titre de variante une nitrocarburation ou une nitruration ionique et/ou une post-oxydation ionique pourraient être envisagées.

Selon les conditions du traitement de nitrocarburation, une couche de braunite peut apparaître sous la couche intermédiaire nitrurée.

Si désiré, au moins un organe de préhension peut être monté sur un goujon soudé sur la surface extérieure de chauffe 2. De préférence, le récipient 7 présente deux organes de préhension opposés.

A titre de variante, le ou les organes de préhension ne sont pas nécessairement rapportés. Le récipient 7 peut présenter notamment un ou plusieurs organes de préhension intégrés, obtenus par exemple par emboutissage.

A titre de variante, le récipient 7 peut présenter un fond 8 sensiblement plan dans sa partie centrale.

La présente invention n'est nullement limitée aux exemples de réalisation décrits, mais englobe de nombreuses modifications dans le cadre des revendications.

## Revendications

1. Article culinaire comportant une surface intérieure de cuisson (1) en acier au carbone nitrocarburé et post-oxydé ou en acier au carbone nitruré et post-oxydé, et une surface extérieure de chauffe (2), **caractérisé en ce que** la surface intérieure de cuisson (1) et la surface extérieure de chauffe (2) appartiennent à un composite métallique colaminé multicouches (3) comportant une première couche (4) extérieure en acier au carbone colaminée avec une deuxième couche (5) en cuivre, et **en ce que** la surface intérieure de cuisson (1) est réalisée sur la première couche (4).

2. Article culinaire selon la revendication 1, **caractérisé en ce que** la surface intérieure de cuisson (1) est formée par une couche oxydée de surface (10) formée sur une couche de combinaison (11) présentant une épaisseur comprise entre 25 µm et 50 µm.

3. Article culinaire selon l'une des revendications 1 ou 2, **caractérisé en ce que** la surface extérieure de chauffe (2) est en acier au carbone nitrocarburé et post-oxydé ou en acier au carbone nitruré et post-oxydé.

4. Article culinaire selon la revendication 3 **caractérisé en ce que** la surface extérieure de chauffe (2) est réalisée sur une troisième couche (6) extérieure colaminée avec la deuxième couche (5) en cuivre.

5. Article culinaire selon la revendication 4, **caractérisé en ce que** la deuxième couche (5) est plus épaisse que la troisième couche (6).

6. Article culinaire selon l'une des revendications 4 ou 5, **caractérisé en ce que** la troisième couche (6) présente une épaisseur comprise entre 0,1 et 0,8 mm.

7. Article culinaire selon l'une des revendications 1 à 6, **caractérisé en ce que** la deuxième couche (5) est plus épaisse que la première couche (4).

8. Article culinaire selon l'une des revendications 1 à 7, **caractérisé en ce que** que la première couche (4) présente une épaisseur comprise entre 0,1 et 0,8 mm.

9. Article culinaire selon l'une des revendications 1 à 8, **caractérisé en ce que** la deuxième couche (5) présente une épaisseur comprise entre 0,8 et 1,5 mm.

10. Article culinaire selon l'une des revendications 1 à 9, **caractérisé en ce que** la surface intérieure de cuisson (1) s'élève de manière progressive depuis un fond (8) jusqu'à un bord supérieur (9).

11. Procédé de fabrication d'un article culinaire selon l'une des revendications 1 à 10 comprenant les étapes suivantes :
- Se procurer une feuille de composite métallique colaminé multicouches (3) comportant au moins une première couche (4) extérieure en acier au carbone colaminée avec une deuxième couche (5) en cuivre,
- Former un récipient (7) dans ladite feuille,
- Effectuer un traitement de nitrocarburation ou de nitruration sur ledit récipient (7),
- Effectuer un traitement de post-oxydation sur ledit récipient (7).

12. Procédé de fabrication d'un article culinaire selon la revendication 11, **caractérisé en ce que** le traitement de nitrocarburation ou de nitruration est réalisé par voie bain de sels.

13. Procédé de fabrication d'un article culinaire selon la revendication 11, **caractérisé en ce que** le traitement de nitrocarburation ou de nitruration est réalisé par voie gazeuse.

14. Procédé de fabrication d'un article culinaire selon l'une des revendications 11 à 13, **caractérisé en ce que** le traitement de post-oxydation est réalisé par voie bain de sels.

15. Procédé de fabrication d'un article culinaire selon l'une des revendications 11 à 13, **caractérisé en ce que** le traitement de post-oxydation est réalisé par voie gazeuse.

## Patentansprüche

1. Kochgeschirr mit einer inneren Garfläche (1) aus nitrocarburiertem und nachoxidiertem Kohlenstoffstahl oder aus nitriertem und nachoxidiertem Kohlenstoffstahl und einer äußeren Heizfläche (2), **dadurch gekennzeichnet, dass** die innere Garfläche (1) und die äußere Heizfläche (2) zu einem mehrschichtigen plattierten Metallverbundwerkstoff (3) gehören, das eine äußere erste Schicht (4) aus Kohlenstoffstahl umfasst, die mit einer zweiten Schicht (5) aus Kupfer plattiert ist, und dass die innere Garfläche (1) auf der ersten Schicht (4) ausgebildet ist.

2. Kochgeschirr nach Anspruch 1, **dadurch gekennzeichnet, dass** die innere Garfläche (1) durch eine oxidierte Oberflächenschicht (10) gebildet wird, die auf einer Verbundschicht (11) mit einer Dicke zwischen 25 µm und 50 µm ausgebildet ist.

3. Kochgeschirr nach einem der Ansprüche 1 oder 2, **dadurch gekennzeichnet, dass** die äußere Heizfläche (2) aus nitrocarburiertem und nachoxidiertem Kohlenstoffstahl oder nitriertem und nachoxidiertem Kohlenstoffstahl besteht.

4. Kochgeschirr nach Anspruch 3, **dadurch gekennzeichnet, dass** die äußere Heizfläche (2) auf einer äußeren dritten Schicht (6) ausgebildet ist, die mit der zweiten Schicht (5) aus Kupfer plattiert ist.

5. Kochgeschirr nach Anspruch 4, **dadurch gekennzeichnet, dass** die zweite Schicht (5) dicker als die dritte Schicht (6) ist.

6. Kochgeschirr nach einem der Ansprüche 4 oder 5, **dadurch gekennzeichnet, dass** die Dicke der dritten Schicht (6) zwischen 0,1 mm und 0,8 mm beträgt.

7. Kochgeschirr nach einem der Ansprüche 1 bis 6, **dadurch gekennzeichnet, dass** die zweite Schicht (5) dicker als die erste Schicht (4) ist.

8. Kochgeschirr nach einem der Ansprüche 1 bis 7, **dadurch gekennzeichnet, dass** die Dicke der ersten Schicht (4) zwischen 0,1 mm und 0,8 mm beträgt.

9. Kochgeschirr nach einem der Ansprüche 1 bis 8, **dadurch gekennzeichnet, dass** die Dicke der zweiten Schicht (5) zwischen 0,8 mm und 1,5 mm beträgt.

10. Kochgeschirr nach einem der Ansprüche 1 bis 9, **dadurch gekennzeichnet, dass** die innere Garfläche (1) ausgehend von einem Boden (8) bis zu einem oberen Rand (9) allmählich ansteigt.

11. Verfahren zur Fertigung eines Kochgeschirrs nach einem der Ansprüche 1 bis 10, das die folgenden Schritte umfasst:
- Beschaffen eines mehrschichtigen plattierten Blechs aus Metallverbundwerkstoff (3) mit zumindest einer äußeren ersten Schicht (4) aus Kohlenstoffstahl, die mit einer zweiten Schicht (5) aus Kupfer plattiert ist,
- Formen eines Gefäßes (7) aus dem genannten Blech,
- Durchführen einer Behandlung der Nitrocarburierung oder Nitrierung an dem genannten Gefäß (7),
- Durchführen einer Behandlung der Nachoxidation an dem genannten Gefäß (7).

12. Verfahren zur Fertigung eines Kochgeschirrs nach Anspruch 11, **dadurch gekennzeichnet, dass** die Behandlung der Nitrocarburierung oder Nitrierung im Salzbad erfolgt.

13. Verfahren zur Fertigung eines Kochgeschirrs nach Anspruch 11, **dadurch gekennzeichnet, dass** die Behandlung der Nitrocarburierung oder Nitrierung im Gas erfolgt.

14. Verfahren zur Fertigung eines Kochgeschirrs nach einem der Ansprüche 11 bis 13, **dadurch gekennzeichnet, dass** die Behandlung der Nachoxidation im Salzbad erfolgt.

15. Verfahren zur Fertigung eines Kochgeschirrs nach einem der Ansprüche 11 bis 13, **dadurch gekennzeichnet, dass** die Behandlung der Nachoxidation im Gas erfolgt.

## Claims

1. Culinary article comprising an inner cooking surface (1) made from nitrocarburised and post-oxidised carbon steel or nitrided and post-oxidised carbon steel and an outer heating surface (2), **characterised in that** the inner cooking surface (1) and the outer heating surface (2) are made from a multilayer colaminated metallic composite (3) comprising a first outer layer (4) made from carbon steel colaminated with a second layer (5) made from copper, and **in that** the inner cooking surface (1) is formed on the first layer (4).

2. Culinary article according to claim 1, **characterised in that** the inner cooking surface (1) is formed by an oxidised surface layer (10) formed on a compound layer (11) of thickness of between 25 µm and 50 µm.

3. Culinary article according to claim 1 or 2, **characterised in that** the outer heating surface (2) is made from nitrocarburised and post-oxidised carbon steel or nitrided and post-oxidised carbon steel.

4. Culinary article according to claim 3, **characterised in that** the outer heating surface (2) is made on a third outer layer (6) colaminated with the second layer (5) made from copper.

5. Culinary article according to claim 4, **characterised in that** the second layer (5) is thicker than the third layer (6).

6. Culinary article according to claim 4 or 5, **characterised in that** the thickness of the third layer (6) is between 0.1 mm and 0.8 mm.

7. Culinary article according to one of claims 1 to 6, **characterised in that** the second layer (5) is thicker than the first layer (4).

8. Culinary article according to one of claims 1 to 7, **characterised in that** the thickness of the first layer (4) is between 0.1 mm and 0.8 mm.

9. Culinary article according to one of claims 1 to 8, **characterised in that** the thickness of the second layer (5) is between 0.8 mm and 1.5 mm.

10. Culinary article according to one of claims 1 to 9, **characterised in that** the inner cooking surface (1) rises gradually from a bottom (8) up to an upper edge (9).

11. Method for manufacturing a culinary article according to one of claims 1 to 10, comprising the following steps:
- Obtain a multilayer colaminated metallic composite sheet (3) comprising at least a first outer layer (4) made from carbon steel colaminated with a second layer (5) made from copper,
- Form a container (7) in said sheet,
- Perform a nitrocarburising or nitriding treatment on said container (7),
- Perform a post-oxidation treatment on said container (7).

12. Method for manufacturing a culinary article according to claim 11, **characterised in that** the nitrocarburising or nitriding treatment is carried out using a salt bath method.

13. Method for manufacturing a culinary article according to claim 11, **characterised in that** the nitrocarburising or nitriding treatment is carried out using a gaseous method.

14. Method for manufacturing a culinary article according to one of claims 11 to 13, **characterised in that** the post-oxidation treatment is carried out using a salt bath method.

15. Method for manufacturing a culinary article according to one of claims 11 to 13, **characterised in that** the post-oxidation treatment is carried out using a gaseous method.
